# EUROPEAN PATENT SPECIFICATION

(11) **EP 2 441 575 B1**
(45) Date of publication and mention of the grant of the patent: **06.01.2016**
(21) Application number: 11184573.1
(22) Date of filing: 11.10.2011
(51) Int. Cl.: B32B 3/12, B32B 5/26, B32B 5/28, E01D 19/12, E04C 2/16, E04C 2/20, E04C 2/22, E04C 2/36, E01D 101/40

(54) **Sandwich panel with connected webs**
Sandwichpaneel mit querverbundenen Rippen
Panneau de type sandwich avec couples liés transversalement

(30) Priority: 13.10.2010 NL 2005508
(43) Date of publication of application: 18.04.2012
(73) Proprietor: FiberCore IP B.V., 3089 JE Rotterdam (NL)
(72) Inventor: Honselaar, Cornelis Henricus, 2381 KG Zoeterwoude (NL); Peeters, Johannes Hendricus Alphonsus, 3071 AW Rotterdam (NL)
(74) Representative: Nederlandsch Octrooibureau

(56) References cited:
- WO-A1-2009/000815
- WO-A1-2011/096935
- DE-C1- 19 715 529
- NL-C2- 1 031 768
- NL-C2- 2 001 830
- TH. KELLER: "Recent all.composite and hybrid fibre-reinforced polymer bridges and buildings", PROGRESS IN STRUCTURAL ENGINEERING AND MATERIALS, vol. 3, 29 August 2001 (2001-08-29), pages 132-140, XP002621123, DOI: 10.1002/pse.66
- "van Dale groot woordenboek der Nederlandse taal", 1989, Van Dale Lexicografie, Utrecht/Antwerpen ISBN: 90-6648-404-7 vol. 3 (S-Z), page 2545, * entry "I schot" *
- "Groot woordenboek Nederlands-Engels", 1986, Van Dale Lexicografie, Utrecht/Antwerpen * entry "baan" *
- "the Concise Oxford Dictionary", 1976, Oxford University Press, Oxford ISBN: 0-19-861121-8 * entry "meander"; page 677 *

## Description

The invention relates to a panel, comprising two panel surfaces located at a distance from one another, webs made from fibrous material which is impregnated with a hardened means extending transversely between the panel surfaces and attached to these panel surfaces, and core elements located between the webs and panel surfaces, wherein adjacent webs are interconnected by partitions made from fibrous material which is impregnated with a hardened means.

Such a panel is disclosed in DE-C-19715529. This prior art panel has core elements which are all surounded by a respective sleeve of fibrous material. Said sleeves together from the webs and partitions by means of which transverse forces are transferred in the panel.

A further panel of this type is known from WO-A-2009/102414. The two panel surfaces of the known panel are interconnected by obliquely positioned webs. Core elements, which are triangular or trapezoidal in cross-section depending on the distance between the webs, are incorporated between these webs and the panel surfaces. The webs and core element extend in the longitudinal direction of the panel continuously between the two head ends of that panel. This panel is laid on these head ends and acts as a bar which has appropriate rigidity and strength characteristics in terms of both bending and shearing between the supports.

However, viewed in the transverse direction, i.e. in the direction from the one longitudinal edge to the other longitudinal edge of the panel, the strength and rigidity characteristics are less favourable. Viewed in this direction, the shearing strength and rigidity are considerably lower than in the longitudinal direction. This is caused by the fact that the transfer of shearing forces in the transverse direction occurs essentially via the core elements. However, these normally consist of a light foam material which is not highly resistant to loads of this type.

A phenomenon of this type does not have to result in problems in those cases in which the forces exerted on the panel can all be directly diverted to the supports on the head ends of the panel. However, a force movement of this type is often not sufficient to reliably absorb the loads on the panel. Reference is made to the use of the panel as a bridge floor. In this case, the upper surface of the panel is exposed to high local loads as a result of the wheel pressure. Although this load can generally be effectively transferred to the head ends of the panel, problems can nevertheless occur locally at the position of the wheel. A local load can result in the panel being locally overloaded. The load cannot in any event be effectively distributed over the parts of the panel which are located next to the loaded position of the panel surface because the shearing rigidity between these parts is relatively low. The risk thus exists that, with very local loads of this type, the panel will become damaged and crushed.

A phenomenon of this type renders the use of panels of this type not easily possible for bridge floors with a high local load. On the other hand, due to their relatively low weight, panels of this type nevertheless offer great advantages over steel or concrete bridge floors. Thus, the bridge foundation for a bridge with plastic panels can be designed as considerably lighter and less expensive, while the risk of subsidence can also be considerably reduced.

The object of the invention is therefore to improve a panel of the type mentioned in the preamble in such a way that it is also suitable for uses in which high local loads occur, as in the case of bridge floors. This object is achieved by the characterising features of claim 1.

The panel thus obtained has webs which are interconnected by shear-resistant partitions. This means that a local load at the position of one of the webs, as exerted, for example, by a wheel of a vehicle, can be transmitted not only by that directly loaded web itself, but also by the directly adjacent webs. The consequence thereof is that the local loads on the panel can be spread over a greater area, in such a way that the risk of local damage to the panel is considerably reduced.

The core elements entirely occupy the area in each case between an adjacent pair of webs and an adjacent pair of partitions which connect these webs. The partitions located in each case between a pair of webs form part of a continuous length of partition material which is disposed meanderingly between these webs.

The length of partition material is connected on specific pieces or connection pieces to the relevant webs, and forms members on other pieces. A close relationship between the partitions and the webs is thereby achieved, which is suitable for transferring shearing forces from the one web to an adjacent web.

The orientation of the partitions can be chosen as required. Thus, the angle between a partition and an associated connection piece can be obtuse. This angle is preferably between 90 and 175 degrees, more preferably between 120 and 150 degrees. In connection with the ensuring of an undisturbed force transfer between the webs and the partitions, the connection pieces must have a defined dimension. In this connection, the length of the connection pieces can be 10 to 40 times the thickness of the partitions and/or of these connection pieces. According to a different possibility, the angle between a partition and an associated connection piece is right or sharp.

Seen in a view at right angles to a panel surface, the core elements can be positioned in cross-section across the webs, obliquely in relation to one another, with the formation of a panel which is curved in transverse cross-section. With this shape, an effective drainage of, for example, a bridge floor is obtained. Furthermore, viewed in the longitudinal direction, the panel can also have a curved form, as is customary, for example, in the case of bridge floors.

The web can form part of a length of web material which similarly extends over the panel surfaces facing away from one another. The length of web material is folded over approximately 90 degrees on both sides of the part thereof which forms the web and is beaten over the panel surfaces with the formation of flaps. These flaps therefore also form part of these panel surfaces, and can also define the complete thickness of the panel surfaces. However, it is also possible for additional layers of material to be used to obtain panel surfaces with the required thickness. The lengths of web material can be folded in different ways and can, for example, be Z-shaped or U-shaped.

As already mentioned, the panel according to the invention can be used in particular as a floor, such as a bridge floor. The invention therefore also relates to a bridge construction, comprising at least two bridge foundations located at a distance from one another, and also a bridge floor laid on these bridge foundations, wherein the bridge floor comprises a panel as described above, from which panel the webs extend from the one bridge foundation to the other bridge foundation.

Nevertheless, the panel according to the invention can also be used for many other purposes, for example for a sluice gate.

The invention will be explained in detail below with reference to an example embodiment shown in the figures.
Figure 1 shows a perspective view of a panel according to the invention.
Figure 2 shows a first embodiment according to the cross-section A-A shown in Figure 1.
Figure 3 shows a second embodiment.
Figure 4 shows the view according to B from Figure 1.
Figure 5 shows an alternative view of Figure 1.

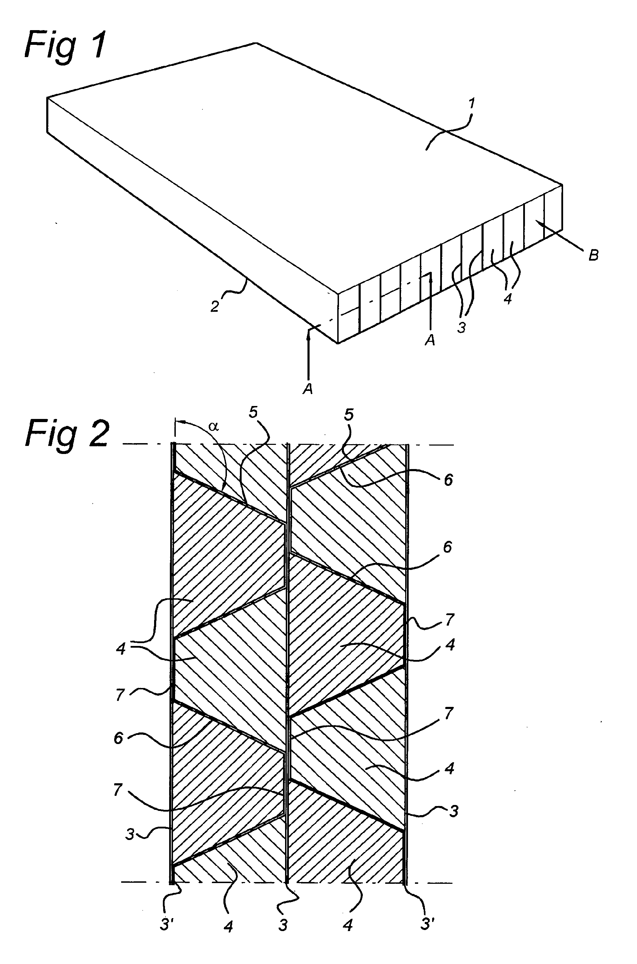

The panel shown in Figure 1 comprises an uppermost panel surface 1 and a lowermost panel surface 2. The webs 3 extend transversely between these panel surfaces 1, 2 in the longitudinal direction of the panel. Core elements 4 are located in each case between two webs 3 and the panel surfaces 1, 2. The panel surfaces 1, 2 and the webs 3 comprise a fibrous material impregnated with a hardened means, such as resin. The core elements 4 may consist of a lightweight material such as a foam material.

According to the invention, the webs 3 of this panel are interconnected. A first possible embodiment of such interconnected webs 3 is shown in the cross-section from Figure 2. In each case, two adjacent webs 3 are interconnected by the meandering length of partition material 5. Each length 5 consists alternately of partitions 6 and connection pieces 7. The connection pieces 7 in each case of a length of partition material 5 are alternately connected to two adjacent webs 3. This connection is obtained by impregnating the webs 3 and the lengths of partition material 5 with a hardenable means, such as a resin. After the hardening of the resin, a firm, coherent whole of webs 3 and lengths of partition material 5 is obtained. The partitions 6 thereby provide a firm, shear-resistant connection between the adjacent webs 3, in such a way that local loads on the surfaces 1, 2 of the panel can also be effectively diverted across the longitudinal direction of the panel.

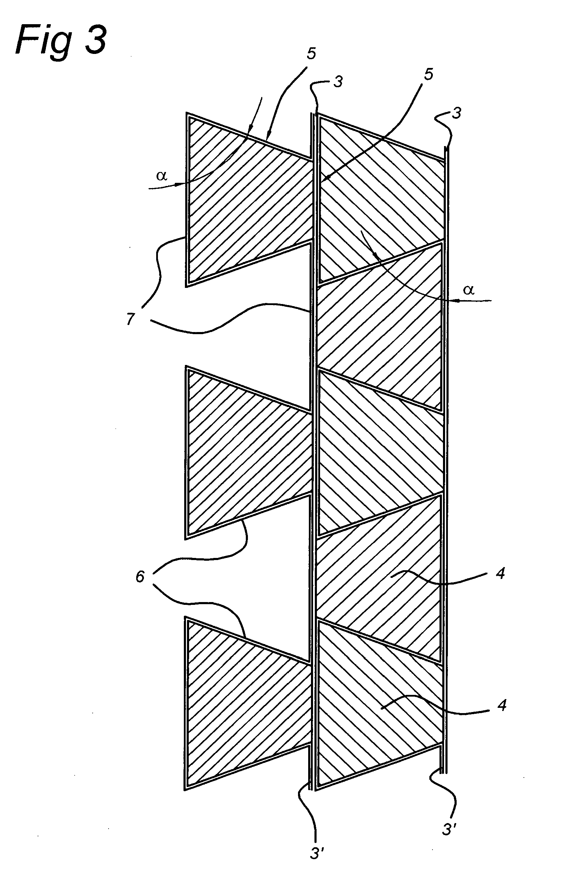

Areas which are entirely filled with the pieces of core material 4 are located in each case between two partitions 6, a web 3, a connection piece 7 and the panel surfaces 1, 2. In the embodiment shown in Figure 2, the angle α in each case between a partition 6 and the connection piece 7 is obtuse, wherein the angle can vary between 120 and 175°. However, the angle α can also be right or sharp; the latter is the case in the variant shown in Figure 3. In this case, the connection pieces 7 of the length of partition material 5 overlap one another, as a result of which an additional firm web part is obtained. This now comprises the original webs 3, and also connection pieces 7 which overlap one another. All of these parts are attached to one another by impregnating them and then hardening the impregnating means, such as a resin.

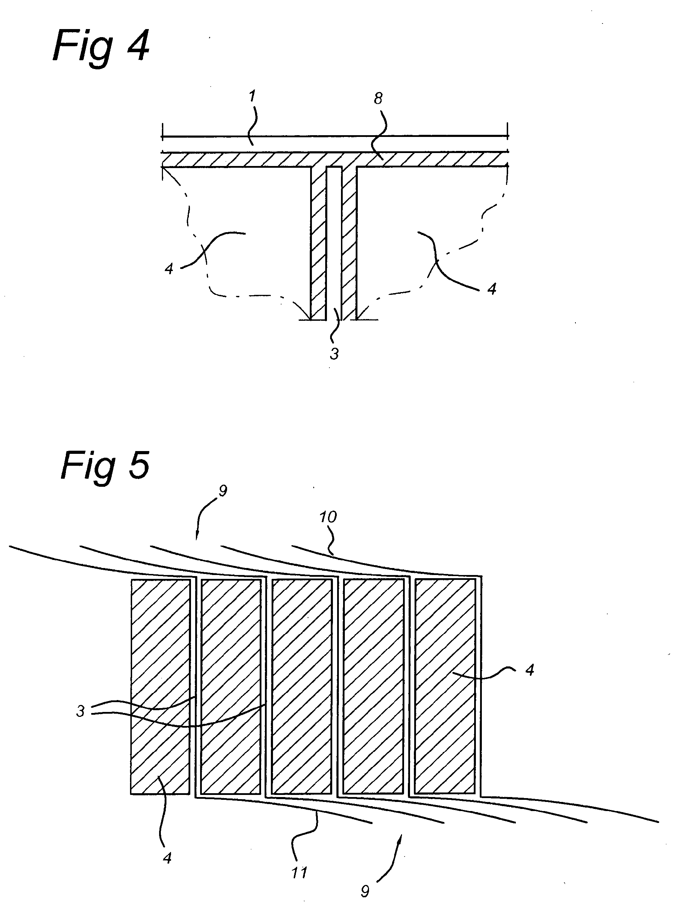

The detail from Figure 4 shows that the webs 3 which extend between the core elements 4 are attached crosswise to the panel surfaces 1, 2. This crosswise attachment is made possible by the hardened material, such as a resin, 8, with which the fibrous material of the web 3 is also impregnated, and which has collected between these different components.

The panel surfaces 1, 2 may also consist of one or more layers of impregnated fibrous material. Additionally or instead thereof, the panel surfaces 1, 2 can be formed by lengths of web material 9 of which the part which forms the web 3 is in each case located between two core elements 4 (as shown in the alternative view of Figure 5). The flaps 10, 11 of these lengths of web material 9 which extend respectively above and below the core elements 4 are folded over and beaten onto the upper surface and lower surface respectively, or onto flaps 10 and 11 respectively, which were folded over prior thereto. One or more additional layers of a fibrous material can possibly be disposed on or between these flaps 10 and 11 respectively. Following impregnation and hardening, the entirety of these layers forms a firm upper layer and lower layer respectively of the panel. Although a Z-shape is shown in the figures for the lengths of web material 9, a U-shape is also possible.

### List of reference numbers

- 1.: Uppermost panel surface
- 2.: Lowermost panel surface
- 3.: Web
- 4.: Core element
- 5.: Length of partition material
- 6.: Partition
- 7.: Connection piece
- 8.: Hardened impregnating means
- 9.: Length of web material
- 10.: Uppermost flap
- 11.: Lowermost flap
- α: Angle between member and connection piece

## Claims

1. Panel, comprising two panel surfaces (1, 2) located at a distance from one another, webs (3, 3') made from fibrous material which is impregnated with a hardened means extending transversely between the panel surfaces and attached to these panel surfaces, and core elements (4) located between the webs (3, 3') and panel surfaces (1, 2), wherein adjacent webs (3, 3') are interconnected by partitions (6) made from fibrous material which is impregnated with a hardened means, **characterized in that** each web (3) forms part of a length of web material (9) which also extends over the panel surfaces (1,2) facing away from one another, **in that** the webs (3) are each designed continuously in one unit in the longitudinal direction thereof and **in that** the partitions (6) located in each case between a pair of webs (3) form part of a continuous length of partition material (5) which is disposed meanderingly between these webs (3) and the length of partition material (5) alternately comprises partitions (6) and connection pieces (7) attached to a web (3).

2. Panel according to Claim 1, wherein the area in each case between an adjacent pair of webs (3, 3') and an adjacent pair of partitions (6) connecting these webs (3, 3') is completely filled with a respective core element (4).

3. Panel according to any of the preceding Claims, wherein the angle α between a partition (6) and an associated connection piece (7) is obtuse, preferably between 90 and 175 degrees, more preferably between 120 and 150 degrees.

4. Panel according to any of the preceding Claims, wherein the angle α between a partition (6) and an associated connection piece (7) is right or sharp, preferably between 5 and 90 degrees, more preferably between 30 and 60 degrees.

5. Panel according to Claim 4, wherein the core elements, in a cross-section across the webs, are positioned obliquely in relation to one another with formation of a panel curved in this transverse cross-section.

6. Panel according to any of the preceding Claims, wherein the length of the connection pieces (7) is 10 to 40 times the thickness of these connection pieces (7) and/or of the partitions (6).

7. Panel according to any of the preceding Claims, wherein the web material paths (3) are Z-shaped.

8. Panel according to any of Claims 1-6, wherein the web material paths (3) are U-shaped.

9. Panel according to Claim 1 or 2, wherein meandering and continuous lengths of partition material (5) are provided which alternately comprise partitions (6) and a connection piece (7) in each case connecting two successive partitions, the angle between each partition (6) and a connection piece (7) is sharp, and connection pieces (7) of a length of partition material (5) in each case overlap two successive connection pieces (7) of an adjacent length of partition material (5) and these overlapping connection pieces (7) are attached to one another with the formation in each case of a continuous web (3').

10. Panel according to Claim 9, wherein the size of the overlap between two connection pieces (7) is 10 to 40 times, preferably 10 to 20 times, greater than the thickness of these connection pieces (7) and/or members (6).

11. Panel according to Claim 9 or 10, wherein an additional web (3) with an essentially straight shape extends between connection pieces (7) of adjacent member material paths (5).

12. Panel according to one of the preceding claims, wherein the partitions (6) are attached crosswise to the opposite panel surfaces (1, 2).

13. Panel according to one of the preceding claims, wherein the panel surfaces (1, 2) are formed by fibrous material which is impregnated with a hardened means.

14. Panel according to one of the preceding claims, wherein the webs (3, 3') and the core elements (4) define a shape curved in the longitudinal direction of the webs.

15. Support construction, comprising at least two supports located at a distance from one another, and a floor laid on these supports, **characterized in that** the floor comprises a panel according to one of the preceding claims, from which panel the webs (3) extend from the one support to the other support.

16. Support construction according to Claim 15, wherein the floor is a bridge floor.

## Patentansprüche

1. Paneel, welches zwei Paneeloberflächen (1, 2) aufweist, die in einer Distanz voneinander angeordnet sind, weiter Stegelemente (3, 3'), die aus Fasermaterial gemacht sind, welches mit einem Härtungsmittel imprägniert ist, die sich quer zwischen den Paneeloberflächen erstrecken und an diesen Paneeloberflächen befestigt sind, und Kernelemente (4), die zwischen den Stegelementen (3, 3') und den Paneeloberflächen (1, 2) angeordnet sind, wobei benachbarte Stegelementen (3, 3') durch Unterteilungen (6) verbunden sind, die aus einem Fasermaterial gemacht sind, welches mit einem Härtungsmittel imprägniert ist, **dadurch gekennzeichnet, dass** jedes Stegelement (3) Teil einer Bahn eines Stegelementmaterials (9) bildet, welche sich auch über die voneinander weg weisenden Paneeloberflächen (1,2) erstreckt, dass die Stegelemente (3) jeweils kontinuierlich in einer Einheit in der Längsrichtung davon konstruiert sind, und dass die Unterteilungen (6), die jeweils zwischen einem Paar von Stegelementen (3) angeordnet sind, einen Teil einer kontinuierlichen Bahn eines Unterteilungsmaterials (5) bilden, welches meanderartig bzw. schlangenförmig zwischen diesen Stegelementen (3) angeordnet ist, und dass die Bahn des Unterteilungsmaterials (5) abwechselnd Unterteilungen (6) und Verbindungsstücke (7) aufweist, die an einem Stegelement (3) befestigt sind.

2. Paneel nach Anspruch 1, wobei der Bereich jeweils zwischen einem benachbarten Paar von Stegelementen (3) und einem benachbarten Paar von Unterteilungen (6), welches diese Stegelemente (3) verbindet, vollständig mit einem jeweiligen Kernelement (4) ausgefüllt ist.

3. Paneel nach einem der vorhergehenden Ansprüche, wobei der Winkel □ zwischen einer Unterteilung (6) und einem assoziierten Verbindungsstück (7) stumpf ist, vorzugsweise zwischen 90 und 175 Grad, insbesondere vorzugsweise zwischen 120 und 150 Grad.

4. Paneel nach einem der vorhergehenden Ansprüche, wobei der Winkel □ zwischen einer Unterteilung (6) und einem assoziierten Verbindungsstück (7) rechtwinklig oder spitz ist, vorzugsweise zwischen 5 und 90 Grad, insbesondere vorzugsweise zwischen 30 und 60 Grad.

5. Paneel nach Anspruch 4, wobei die Kernelemente im Querschnitt über die Stegelemente in Beziehung zueinander schräg positioniert sind, wobei ein Paneel geformt wird, welches in diesem quer verlaufenden Querschnitt gekrümmt ist.

6. Paneel nach einem der vorhergehenden Ansprüche, wobei die Länge der Verbindungsstücke (7) zehn bis vierzigmal die Dicke dieser Verbindungsstücke (7) und/oder der Unterteilungen (6) ist.

7. Paneel nach einem der vorhergehenden Ansprüche, wobei die Pfade bzw. Verläufe des Stegmaterials (3) Z-förmig sind.

8. Paneel nach einem der vorhergehenden Ansprüche, wobei die Pfade bzw. Verläufe des Stegmaterials (3) U-förmig sind.

9. Paneel nach Anspruch 1 oder 2, wobei meanderartige und kontinuierliche Bahnen von Unterteilungsmaterial (5) vorgesehen sind, die abwechselnd Unterteilungen (6) und ein Verbindungsstück (7) aufweisen die jeweils zwei aufeinander folgende Unterteilungen verbinden, wobei der Winkel zwischen jeder Unterteilung (6) und einem Verbindungsstück (7) spitz ist, und wobei Verbindungsstücke (7) einer Bahn eines Unterteilungsmaterials (5) jeweils zwei aufeinander folgende Verbindungsstücke (7) einer benachbarten Bahn von Unterteilungsmaterial (5) überlappen, und wobei diese überlappenden Verbindungsstücke (7) aneinander befestigt sind, wobei in jedem Abteil ein durchgehendes Stegelement (3') gebildet wird.

10. Paneel nach Anspruch 9, wobei die Größe der Überlappung zwischen zwei Verbindungsstücken (7) von zehn bis vierzigmal, vorzugsweise zehn bis zwanzigmal größer als die Dicke dieser Verbindungsstücke (7) und/oder Glieder (6) ist.

11. Paneel nach Anspruch 9 oder 10, wobei ein zusätzliches Stegelement (3) mit einer im Wesentlichen geraden Form sich zwischen den Verbindungsstücken (7) von benachbarten Materialpfaden (5) erstreckt.

12. Paneel nach einem der vorhergehenden Ansprüche, wobei die Unterteilungen (6) quer zu den gegenüberliegenden Paneeloberflächen (1, 2) befestigt sind.

13. Paneel nach einem der vorhergehenden Ansprüche, wobei die Paneeloberflächen (1, 2) durch Fasermaterial gebildet werden, welches mit einem Härtungsmittel imprägniert ist.

14. Paneel nach einem der vorhergehenden Ansprüche, wobei die Stegelemente (3, 3') und die Kernelemente (4) eine Form definieren, die in der Längsrichtung der Stegelemente gekrümmt ist.

15. Tragstruktur, die zumindest zwei Träger aufweist, die in einem Abstand voneinander angeordnet sind, und einen Boden, der auf diesen Trägern ausgelegt ist, **dadurch gekennzeichnet, dass** der Boden ein Paneel nach einem der vorhergehenden Ansprüche aufweist, wobei sich von dem Paneel die Stegelemente (3) von dem einen Träger zu dem anderen Träger erstrecken.

16. Tragstruktur nach Anspruch 15, wobei der Boden ein Boden einer Brücke ist.

## Revendications

1. Panneau, comprenant deux surfaces de panneau (1, 2) situées à une certaine distance l'une de l'autre, des bandes (3, 3') réalisées à partir d'un matériau fibreux qui est imprégné avec un moyen durci s'étendant transversalement entre les surfaces de panneau et fixé à ces surfaces de panneau, et des éléments centraux (4) situés entre les bandes (3, 3') et les surfaces de panneau (1, 2), dans lequel des bandes adjacentes (3, 3') sont reliées entre-elles par des cloisons (6) réalisées à partir d'un matériau fibreux qui est imprégné avec un moyen durci, **caractérisé en ce que** chaque bande (3) fait partie d'une longueur d'un matériau de bande (9) qui s'étend également sur les surfaces de panneau (1, 2) opposées les unes aux autres, **en ce que** les bandes (3) sont conçues chacune de manière continue en une seule unité dans leur direction longitudinale et **en ce que** les cloisons (6) situées, dans chaque cas, entre une paire de bandes (3) font partie d'une longueur continue d'un matériau de cloison (5) qui est disposé en méandres entre ces bandes (3) et la longueur du matériau de cloison (5) comprend des cloisons (6) et des pièces de liaison (7) en alternance fixées à une bande (3).

2. Panneau selon la revendication 1, dans lequel dans chaque cas, la zone entre une paire de bandes adjacentes (3, 3') et une paire de cloisons adjacentes (6) reliant ces bandes (3, 3') est complètement remplie d'un élément central respectif (4).

3. Panneau selon l'une des revendications précédentes, dans lequel l'angle α entre une cloison (6) et une pièce de liaison associée (7) est obtus, de préférence compris entre 90 et 175 degrés, plus préférablement compris entre 120 et 150 degrés.

4. Panneau selon l'une des revendications précédentes, dans lequel l'angle α entre une cloison (6) et une pièce de liaison associée (7) est droit ou aigu, de préférence compris entre 5 et 90 degrés, plus préférablement compris entre 30 et 60 degrés.

5. Panneau selon la revendication 4, dans lequel les éléments centraux, dans une section transversale sur les bandes, sont positionnés obliquement les uns par rapport aux autres avec formation d'un panneau incurvé dans cette section transversale.

6. Panneau selon l'une des revendications précédentes, dans lequel la longueur des pièces de liaison (7) est de 10 à 40 fois l'épaisseur de ces pièces de liaison (7) et/ou des cloisons (6).

7. Panneau selon l'une des revendications précédentes, dans lequel les trajets de matériau de bande (3) sont en forme de Z.

8. Panneau selon l'une des revendications 1 à 6, dans lequel les trajets de matériau de bande (3) sont en forme de U.

9. Panneau selon la revendication 1 ou 2, dans lequel des longueurs continues et en méandres du matériau de cloison (5) qui comprennent des cloisons (6) et une pièce de liaison (7) en alternance reliant, dans chaque cas, deux cloisons successives, sont prévues, l'angle entre chaque cloison (6) et une pièce de liaison (7) est aigu, et des pièces de liaison (7) d'une longueur du matériau de cloison (5) chevauchent, dans chaque cas, deux pièces de liaison (7) successives d'une longueur adjacent du matériau de cloison (5) adjacent et ces pièces de liaison (7) qui se chevauchent sont fixées les unes aux autres avec formation d'une bande continue (3'), dans chaque cas.

10. Panneau selon la revendication 9, dans lequel la taille du chevauchement entre deux pièces de liaison (7) est 10 à 40 fois, de préférence 10 à 20 fois, supérieure à l'épaisseur de ces pièces de liaison (7) et/ou des éléments (6).

11. Panneau selon la revendication 9 ou 10, dans lequel une bande supplémentaire (3) ayant une forme essentiellement rectiligne s'étend entre des pièces de liaison (7) de trajets de matériau d'élément adjacents (5).

12. Panneau selon l'une des revendications précédentes, dans lequel les cloisons (6) sont fixées transversalement par rapport aux surfaces opposées de panneau (1, 2).

13. Panneau selon l'une des revendications précédentes, dans lequel les surfaces de panneau (1, 2) sont formées par un matériau fibreux qui est imprégné avec un moyen durci.

14. Panneau selon l'une des revendications précédentes, dans lequel les bandes (3, 3') et les éléments centraux (4) définissent une forme incurvée dans la direction longitudinale des bandes.

15. Structure porteuse, comprenant au moins deux supports situés à une certaine distance l'un de l'autre, et un plancher posé sur ces supports, **caractérisée en ce que** le plancher comprend un panneau selon l'une des revendications précédentes, les bandes (3) de ce panneau s'étendent d'un support à l'autre.

16. Structure porteuse selon la revendication 15, dans laquelle le plancher est un plancher de pont.
